# EUROPEAN PATENT SPECIFICATION

(11) **EP 1 271 272 B1**
(45) Date of publication and mention of the grant of the patent: **21.09.2005**
(21) Application number: 01912353.8
(22) Date of filing: 14.03.2001
(51) Int. Cl.: G05B 23/02, H04Q 9/00

(54) **REMOTE MANAGEMENT SYSTEM**
FERNSTEUERSYSTEM
SYSTEME DE TELEGESTION

(30) Priority: 14.03.2000 JP 2000069992
(43) Date of publication of application: 02.01.2003
(73) Proprietor: Yamatake Corporation, Tokyo 150-8316 (JP)
(72) Inventor: WATANABE, Tsutomu c/o YAMATAKE CORPORATION, Shibuya-ku, Tokyo 150-8316 (JP)
(74) Representative: Wenzel & Kalkoff
(86) International application number: PCT/JP2001/002013
(87) International publication number: WO 2001/069338

(56) References cited:
- JP-A- 6 318 114
- JP-A- 10 198 878
- JP-A- 11 039 023
- US-A- 4 847 894
- US-A- 5 890 080

## Description

### Technical Field

The present invention relates to a remote management system according to the preamble of claim 1 which manages the states of various facilities at geographically distant places via a communication line such as the Internet.

### Background Art

In a conventional remote management system of this type, a facility management apparatus is installed in each area (e.g., a building), and the states of various facilities within the area are managed. Such facility management apparatuses are connected to the central monitor of the center via a communication line such as the Internet, and information is exchanged between the facility management apparatuses and the central monitor.

More specifically, facility management apparatuses monitor various facility states such as air-conditioning, illumination, heat source, and crime prevention in areas A and B, and execute operations such as the start/stop of operations of these facilities. The central monitor accumulates pieces of information from the facility management apparatuses in areas A and B, analyzes and displays the pieces of information, and sends operation instructions to the facility management apparatuses in areas A and B.

For example, assume that a given air-conditioner fails in an air-conditioning facility in area A due to the blower. In this case, the center displays a list of air-conditioning facilities in all the monitored areas on the display of the central monitor. The list of air-conditioning facilities is searched for air-conditioners which use blowers of the same type (e.g., the same manufacturer) as the failed air-conditioner. It is determined that these air-conditioners may also fail because of the same reason. Then, the center notifies the managers of areas where these air-conditioners are used of the possibility of the same failure. The managers who have received the notifications prevent any trouble by managing or exchanging the air-conditioners so as to change the environmental conditions of the air-conditioners from those of the troubled air-conditioner.

In the prior art, the manager searches the list of air-conditioning facilities in all the areas for ones using blowers of the same type as that of the failed air-conditioner while confirming accumulated data. This work takes much labor and time.

US 5 890 080 relates to an electrical component management system in a truck, with component management apparatuses, which manage states of various components, and a central instrumentation control unit which is connected to the component management apparatuses via a communication line and provided to check electronic components installed in the truck, reset faults and events stored in a data logging facility, and display data messages on a display device. Data messages include fault information and information about installed software and make/model.

### Disclosure of Invention

The present invention has been made to overcome the conventional drawbacks, and has as its object to provide a remote management system capable of easily searching for the component of a facility which may cause the same event.

To achieve the above object, according to the present invention, first to Nth facility management apparatuses comprise facility model generation means (means for generating element models for various components of a facility on the basis of environmental data, measurement data, facility-inherent data, and facility character information, defining a set of element models as a facility model, and generating facility models for various facilities), and a central monitor comprises similar element model group generation means (means for picking up the facility models of various facilities from the first to Nth facility management apparatuses, extracting similar element models from the facility models, and defining a set of extracted element models as a similar element model group).

According to the present invention, the first to Nth facility management apparatuses generate element models for each facility on the basis of environmental data, measurement data, facility-inherent data, and facility character information, define a set of element models as a facility model, and generate facility models for various facilities. The central monitor picks up the facility models of various facilities from the first to Nth facility management apparatuses, extracts similar element models from the facility models, and defines a set of extracted element models as a similar element model group.

### Brief Description of Drawings

Fig. 1A is a view showing the main arrangement of a facility management apparatus shown in Fig. 2;
Fig. 1B is a view showing the main arrangement of a central monitor shown in Fig. 2;
Fig. 2 is a view showing the system configuration of a remote management system according to an embodiment of the present invention; and
Fig. 3 is a view showing an example of the element model of an air-conditioning facility.

### Best Mode of Carrying Out the Invention

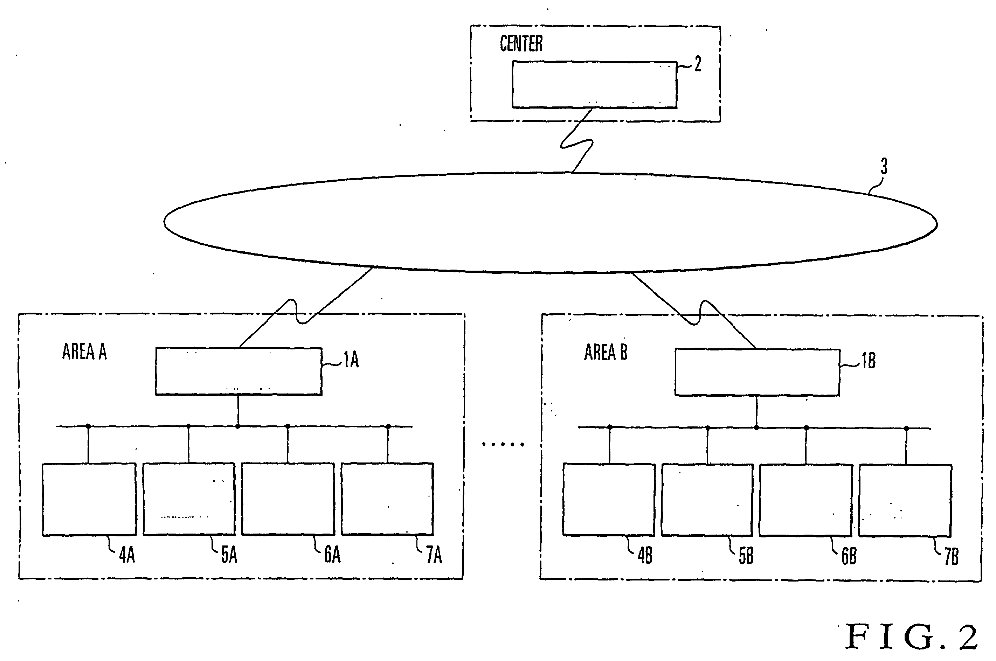

The present invention will be described in detail below on the basis of an embodiment. Fig. 2 is a view showing the system configuration of a remote management system according to the embodiment of the present invention. In Fig. 2. reference numeral 1A denotes a facility management apparatus in area A; 1B, a facility management apparatus in area B; 2, a central monitor at the center; and 3, a communication line (Internet).

The facility management apparatuses 1A and 1B and the central monitor 2 are connected via the Internet 3. The facility management apparatus 1A monitors the states of various facilities such as an air-conditioning facility 4A, illumination facility 5A, heat source facility 6A, and crime prevention facility 7A in area A, and performs operations such as the start/stop of operations of these facilities.

The facility management apparatus 1B monitors the states of various facilities such as an air-conditioning facility 4B, illumination facility 5B, heat source facility 6B, and crime prevention facility 7B in area B, and performs operations such as the start/stop of operations of these facilities.

The central monitor 2 accumulates pieces of information from the facility management apparatuses 1A and 1B, analyzes and displays the pieces of information, and sends operation instructions to the facility management apparatuses 1A and 1B.

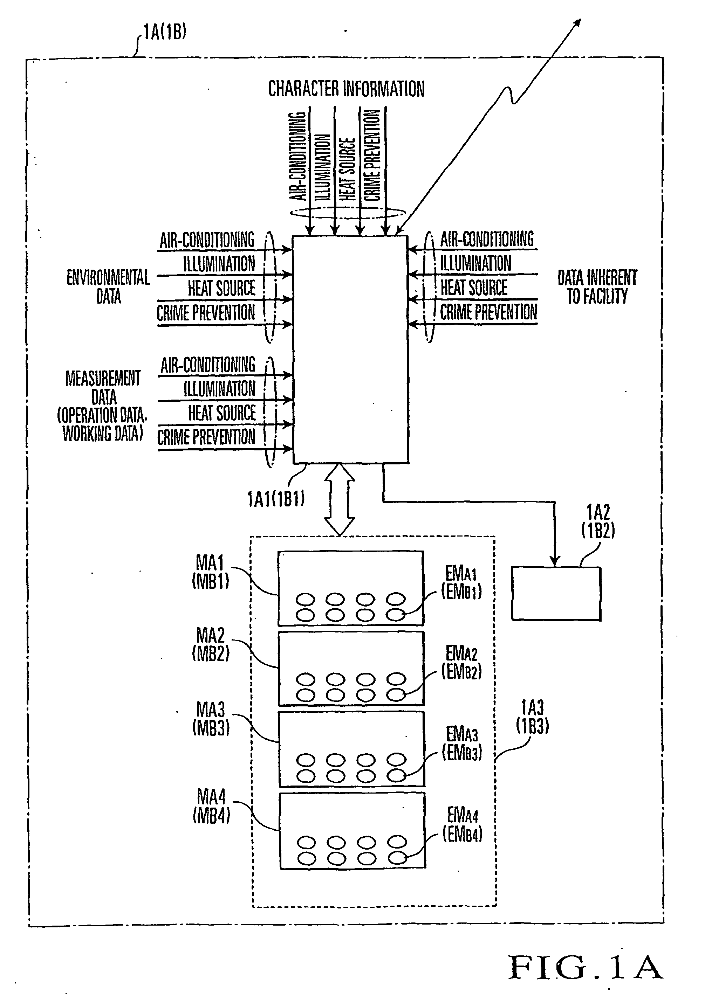

Fig. 1A shows the main arrangement of the facility management apparatus 1A. The facility management apparatus 1A comprises a control section 1A1, display section 1A2, and storage section 1A3. The control section 1A1 receives environmental data such as the temperature, humidity, and pressure, and measurement data (operation data and working data) such as the flow rate, current, voltage, frequency, rotational speed, availability, working time, and the number of works from environment measurement sensors (not shown) installed in the air-conditioning facility 4A, illumination facility 5A, heat source facility 6A, and crime prevention facility 7A. For each facility, the control section 1A1 receives data inherent to the facility such as the design specifications (product name, manufacturer name, and the like), production specifications, material, shape, performance, precision, and position information, and facility character information such as the use purpose, installation purpose, target, comings and goings of people, and the possibility of manual operation. Outputs such as the performance and function are generated as a result of operating the facility on the basis of the pieces of input information. Outputs such as a failure are generated upon changes over time or depending on the environment or the like. There outputs are considered to be inherent to the facility or the like.

The control section 1A1 generates element models for various components of a facility based on environmental data, measurement data, facility-inherent data, and facility character information, and defines a set of element models as a facility model of the facility. The control section 1A1 generates facility models for various facilities, and stores them in the storage section 1A3. That is, the control section 1A1 performs modeling of finding out a predetermined rule for the relationship between input information such as environmental data, measurement data, facility-inherent data, and facility character information, and outputs such as the performance, function, and failure as a result of operating the facility. For example, as for an air-conditioner, the outside air temperature and humidity and a target setting temperature are input, and an electric heater or the like is so controlled as to achieve the target temperature. As the ability of the air-conditioner degrades, the setting value can be maintained only by an output of 80% upon changes over time though the target temperature can be achieved by an output of 50% under the same conditions at the beginning. In this situation, the performance is considered to degrade. Modeling finds out a predetermined rule of causing such degradation upon reception of an input or upon changes over time in a given situation. Modeling is executed using a neural network, TCBM (Topological Case-Based Modeling), or the like, and the present invention can adopt any means. Modeling is performed for various components of a facility to generate element models. A set of element models is defined as a facility model of the facility. Facility models are generated for various facilities and stored in the storage section 1A3.

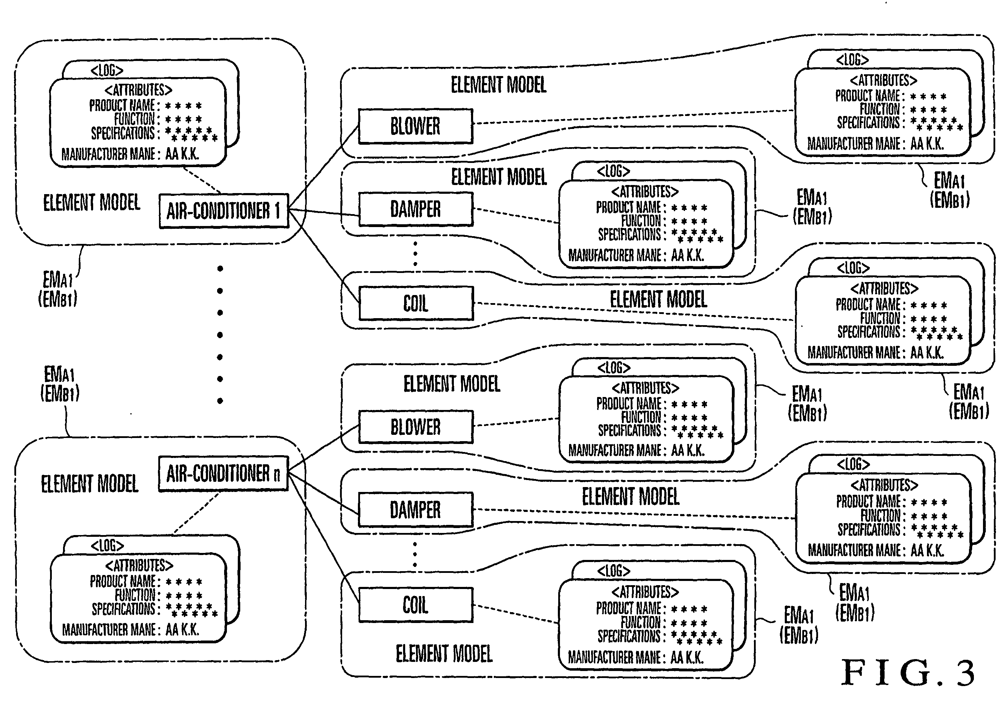

For example, as for the air-conditioning facility 4A, the air-conditioning facility 4A comprises many air-conditioners. These air-conditioners "air-conditioner 1" to "air-conditioner n" are respectively made up of blowers, dampers, coils, and the like. The control section 1A1 sets "air-conditioner 1" to "air-conditioner n" and the blowers, dampers, coils, and the like of the "air-conditioner 1" to "air-conditioner n" as components of the air-conditioning facility 4A. The control section 1A1 generates attributes and log information on the basis of environmental data, measurement data, facility-inherent data, and facility character information of the air-conditioning facility 4A. The control section 1A1 associates the attribute and log information with each component to generate an element model EM_{A1} (see Fig. 3). The control section 1A1 defines a set of element model EM_{A1} as an air-conditioning facility model MA1, which is stored in the storage section 1A3.

Similarly, the control section 1A1 generates an illumination facility model MA2 as a set of element models EM_{A2} of the illumination facility 5A, a heat source facility model MA3 as a set of element models EM_{A3} of the heat source facility 6A, and a crime prevention facility model MA4 as a set of element models EM_{A4} of the crime prevention facility 7A. The facility models MA2, MA3, and MA4 are stored in the storage section 1A3.

The facility management apparatus 1B comprises a control section 1B1, display section 1B2, and storage section 1B3, similar to the facility management apparatus 1A. The control section 1B1 generates an air-conditioning facility model MB1 as a set of element models EM_{B1} of the air-conditioning facility 4B, an illumination facility model MB2 as a set of element models EM_{B2} of the illumination facility 5B, a heat source facility model MB3 as a set of element models EM_{B3} of the heat source facility 6B, and a crime prevention facility model MB4 as a set of element models EM_{B4} of the crime prevention facility 7B. The facility models MB1, MB2, MB3, and MB4 are stored in the storage section 1B3.

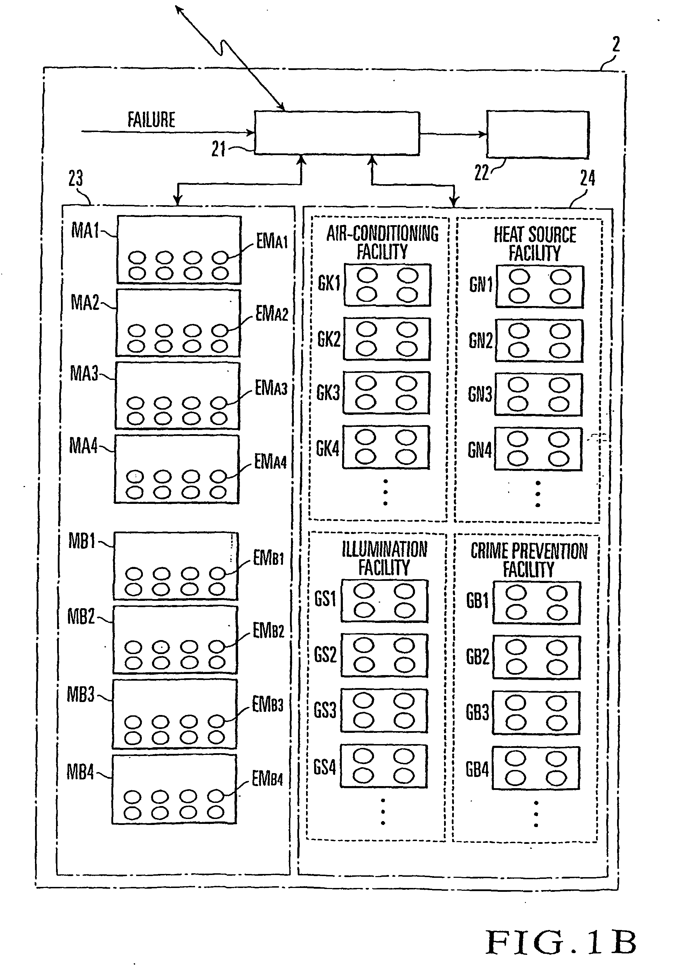

Fig. 1B shows the main arrangement of the central monitor 2. The central monitor 2 comprises a control section 21, display section 22, storage section (first storage section) 23, and storage section (second storage section) 24. The control section 21 periodically accesses the facility management apparatus 1A in area A and the facility management apparatus 1B in area B via the Internet 3. The control section 21 picks up the air-conditioning facility models MA1 and MB1, illumination facility models MA2 and MB2, heat source facility models MA3 and MB3, and crime prevention facility models MA4 and MB4 which are stored in the storage sections 1A3 and 1B3. Then, the control section 21 temporarily stores these models in the storage section 23.

The control section 21 extracts similar element models from the air-conditioning facility models MA1 and MB1, illumination facility models MA2 and MB2, heat source facility models MA3 and MB3, and crime prevention facility models MA4 and MB4 which are stored in the storage section 23. The control section 21 stores a set of extracted element models as a similar element model group in the storage section 24.

For example, as for the air-conditioning facility models MA1 and MB1, the element models of air-conditioners of the same manufacturer are extracted from the element models EM_{A1} and EM_{B1} of the air-conditioning facility models MA1 and MB1. The extracted air-conditioner element models are gathered into a similar element model group GK1, which is then stored in the storage section 24. Similarly, the element models of blowers of the same manufacturer are gathered into an element model group GK2; the element models of dampers of the same manufacturer, into an element model group GK3; and the element models of coils of the same manufacturer, into an element model group GK4. In this manner, similar element model groups are generated and stored in the storage section 24.

Assume that "air-conditioner 1" fails in the air-conditioning facility 4A in area A owing to the blower. In this case, the manager at the center inputs failure information "'air-conditioner 1' has failed owing to its blower." to the control section 21 of the central monitor 2. That is, "the blower of 'air-conditioner 1' " is designated as a failed component. After "the blower of 'air-conditioner 1' " is designated as a failed component, the control section 21 of the central monitor 2 searches similar element model groups stored in the storage section 24 for a similar element model group which includes "the blower of 'air-conditioner 1' ", and displays the element models of the similar element model group on the display section 22.

If the similar element model group GK2 includes the element model of "the blower of 'air-conditioner 1' ", element models in the similar element model group GK2 are displayed on the display section 22. In other words, when "the blower of 'air-conditioner 1' " is designated as a failed component, all the element models of blowers of the same manufacturer as that of the failed blower are displayed on the display section22. Hence, the manager can immediately grasp blowers which may cause the same failure in areas A and B, and can quickly notify the managers of areas where air-conditioners having the blowers are used of the possibility of the same failure.

The control section 21 may be given a function of automatically announcing the possibility of the same event. When a component which has caused a failure is designated, the control section 21 searches the storage section 24 for a similar element model group including the element model of the component, and notifies, of the possibility of the same failure, a facility management apparatus which has generated the facility model including the element model in the similar element model group.

In this embodiment, the central monitor 2 periodically accesses the facility management apparatuses 1A and 1B, and picks up the facility models of various facilities stored in the storage sections 1A3 and 1B3. In the central monitor 2, similar element models are periodically grouped based on the latest data. If environmental data, measurement data, facility-inherent data, or facility character information changes in the facility management apparatus 1A or 1B, an element model changes, and the similarity determination criterion shifts from the previous one, the changed element model is included in another similar element model group.

In the above-described embodiment, the manufacturer is employed as a similarly determination criterion. The similarly determination criterion may be the working time or the number of works. Similar element model groups in the storage section 24 can be searched for a component whose working time has exceeded a predetermined time or a component in which the number of works has exceeded a predetermined number of works, thus prompting the maintenance.

In the above-described embodiment, the central monitor 2 comprises the storage section 23, and the storage section 23 temporarily stores the air-conditioning facility models MA1 and MB1, illumination facility models MA2 and MB2, heat source facility models MA3 and MB3, and crime prevention facility models MA4 and MB4 which are picked up from the facility management apparatuses 1A and 1B. Instead of storing the facility models, similar element models may be immediately grouped and stored in the storage section 24.

In the above-described embodiment, facilities are an air-conditioning facility, illumination facility, heat source facility, and crime prevention facility, but are not limited to them. For example, the facilities may be various ones in a factory or plant, or ones at a convenience store. The present invention can be applied to any field.

As has been described above, according to the present invention, the first to Nth facility management apparatuses comprise facility model generation means (means for generating element models for various components of a facility on the basis of environmental data, measurement data, facility-inherent data, and facility character information, defining a set of element models as a facility model, and generating facility models for various facilities). The central monitor comprises similar element model group generation (means for picking up the facility models of various facilities from the first to Nth facility management apparatuses, extracting similar element models from the facility models, and defining a set of extracted element models as a similar element model group). When a component is designated upon occurrence of a given event, a similar element model group including the element model of the component is searched for. Accordingly, a facility component which may cause the same event can be easily found out.

### Industrial Applicability

As described above, the remote management system according to the present invention is suitable for remote management of an air-conditioning facility, an illumination facility, a heat source facility, a crime prevention facility, various facilities in a factory, plant, or research facility, facilities at a convenience store, and the like.

## Claims

1. A remote management system having first to Nth (N ≧ 2) facility management apparatuses (1A; 1B) which are arranged in respective areas (A, B) and manage states of various facilities (4A, 5A, 6A, 7A; 4B, 5B, 6B, 7B) in the areas, and a central monitor (2) which is connected to the facility management apparatuses (1A; 1B) via a communication line and exchanges information with the facility management apparatuses (1A; 1B), **characterized in that**
the first to Nth facility management apparatuses comprise facility model generation means (1A1; 1B1) for generating element models (EM_{A1}, ..., EM_{A4}; EM_{B1}, ..., EM_{B4}) for various components of a facility on the basis of input information such as environmental data, measurement data, facility-inherent data, and facility character information, an element model of a component of a facility being a predetermined rule for the relationship between input information such as environmental data, measurement data, data inherent to the facility, and facility character information, and outputs from the facility, defining a set of element models as a facility model of the facility, and generating facility models (MA1, ..., MA4; MB1, ..., MB4) for various facilities (4A, ..., 7A; 4B, ..., 7B), and
the central monitor (2) comprises similar element model group generation means (21) for picking up the facility models (MA1, ..., MA4; MB1, ..., MB4) of various facilities (4A, ..., 7A; 4B, ..., 7B) from the first to Nth facility management apparatuses (1A; 1B), extracting similar element models (GK1, ..., GK4; GS1, ..., GS4; GN1, ..., GN4; GB1, ..., GB4) from the facility models (MA1, ..., MA4; MB 1, ..., MB4), and defining a set of extracted similar element models as a similar element model group.

2. A remote management system according to claim 1, **characterized in that** the first to Nth facility management apparatuses (1A; 1B) comprise means (1A3; 1B3) for storing the generated facility models (MA1, ..., MA4; MB1, ..., MB4) of various facilities (4A, ..., 7A; 4B, ..., 7B).

3. A remote management system according to claim 1 or 2, **characterized in that** the central monitor (2) comprises means (23) for storing the facility models (MA1, ..., MA4; MB1, ..., MB4) of various facilities (4A, ..., 7A; 4B, ..., 7B) which are picked up from the first to Nth facility management apparatuses (1A; 1B).

4. A remote management system according to claim 1, **characterized in that** the central monitor (2) comprises means (24) for storing the generated similar element model group.

5. A remote management system according to claim 1, **characterized in that** the similar element model group generation means (21) is adapted for, when a component is designated upon occurrence of a given event, searching for a similar element model group including an element model of the designated component.

6. A remote management system according to claim 5, **characterized in that** the central monitor (2) comprises similar element model display means (22) for displaying element models in the similar element model group searched by the similar element model group generation means (21).

7. A remote management system according to claim 5, **characterized in that** the central monitor (2) comprises notification means for notifying, of possibility of the event, a facility management apparatus which has generated a facility model including the element model in the similar element model group searched by the similar element model group generation means (21).

8. A remote management system according to claim 1, **characterized in that** the central monitor (2) periodically picks up the facility models (MA1, ..., MA4; MB₁, ..., MB4) of various facilities (4A, ..., 7A; 4B, ..., 7B) from the first to Nth facility management apparatuses (1A; 1B).

## Patentansprüche

1. Fernverwaltungssystem mit ersten bis N-ten (N≥2) Einrichtungsverwaltungsvorrichtungen (1A; 1B), die in jeweiligen Bereichen (A, B) angeordnet sind und Zustände verschiedener Einrichtungen (4A, 5A, 6A, 7A; 4B, 5B, 6B, 7B) in den Bereichen verwalten, und einem zentralen Monitor (2), der über eine Kommunikationsleitung mit den Einrichtungsverwaltungsvorrichtungen (1A; 1B) verbunden ist und Informationen mit den Einrichtungsverwaltungsvorrichtungen (1A; 1B) austauscht,
**dadurch gekennzeichnet, dass**
die ersten bis N-ten Einrichtungsverwaltungsvorrichtungen Einrichtungsmodellerzeugungsmittel (1A1; 1B1) zum Erzeugen von Elementmodellen (EM_{A1}, ..., EM_{A4}; EM_{B1}, ..., EM_{B4}) für verschiedene Komponenten einer Einrichtung auf Basis von Eingabeinformationen wie z.B. Umgebungsdaten, Messdaten, Einrichtungs-inhärenten Daten und Einrichtungsmerkmalsinformationen, wobei ein Elementmodell einer Komponente einer Einrichtung eine vorbestimmte Regel für die Beziehung zwischen Eingabeinformationen wie z.B. Umgebungsdaten, Messdaten, Einrichtungs-inhärenten Daten, Einrichtungsmerkmalsinformationen und Ausgaben der Einrichtung ist, wobei ein Satz von Elementmodellen als ein Einrichtungsmodell der Einrichtung definiert ist, und Erzeugen von Einrichtungsmodellen (MA1, ..., MA4; MB1, ..., MB4) für verschiedene Einrichtungen (4A, ..., 7A; 4B, ..., 7B) umfasst und
der zentrale Monitor (2) Ähnlichelementmodell-Gruppenerzeugungsmittel (21) zum Aufnehmen der Einrichtungsmodelle (MA1, ..., MA4; MB1, ..., MB4) verschiedener Einrichtungen (4A, ..., 7A; 4B, ..., 7B) von den ersten bis N-ten Einrichtungsverwaltungsvorrichtungen (1A; 1B), Extrahieren von Ähnlichelementmodellen (GK1, ..., GK4; GS1, ..., GS4; GN1, ..., GN4; GB1, ..., GB4) aus den Einrichtungsmodellen (MA1, ..., MA4; MB1, ..., MB4), und Definieren eines Satzes von extrahierten Ähnlichelementmodellen als eine Ähnlichelementmodellgruppe umfasst.

2. Fernverwaltungssystem nach Anspruch 1, **dadurch gekennzeichnet, dass** die ersten bis N-ten Einrichtungsverwaltungsvorrichtungen (1A; 1B) Mittel (1A3; 1B3) zum Speichern der erzeugten Einrichtungsmodelle (MA1, ..., MA4; MB1, ..., MB4) verschiedener Einrichtungen (4A, ..., 7A; 4B, ..., 7B) umfassen.

3. Fernverwaltungssystem nach Anspruch 1 oder 2, **dadurch gekennzeichnet, dass** der zentrale Monitor (2) Mittel (23) zum Speichern der Einrichtungsmodelle (MA1, ..., MA4; MB1, ..., MB4) verschiedener Einrichtungen (4A, ..., 7A; 4B, ..., 7B) umfasst, die von den ersten bis N-ten Einrichtungsverwaltungsvorrichtungen (1A; 1B) aufgenommen werden.

4. Fernverwaltungssystem nach Anspruch 1, **dadurch gekennzeichnet, dass** der zentrale Monitor (2) Mittel (24) zum Speichern der Ähnlichelementmodellgruppe umfasst.

5. Fernverwaltungssystem nach Anspruch 1, **dadurch gekennzeichnet, dass** das Ähnlichelementmodell-Gruppenerzeugungsmittel (21) eingerichtet ist, um, wenn eine Komponente infolge des Auftretens eines gegebenen Ereignisses bestimmt wird, eine Ähnlichelementmodellgruppe umfassend ein Elementmodell der bestimmten Komponente zu suchen.

6. Fernverwaltungssystem nach Anspruch 5, **dadurch gekennzeichnet, dass** der zentrale Monitor (2) Ähnlichelementmodell-Anzeigemittel (22) zum Anzeigen von Elementmodellen in der Ähnlichelementmodellgruppe aufweist, die vom Ähnlichelementmodell-Gruppenerzeugungsmittel (21) gesucht wird.

7. Fernverwaltungssystem nach Anspruch 5, **dadurch gekennzeichnet, dass** der zentrale Monitor (2) Benachrichtigungsmittel zum Benachrichtigen einer Einrichtungsverwaltungsvorrichtung, die ein Einrichtungsmodell erzeugt hat, das das Elementmodell in der vom Ähnlichelementmodell-Gruppenerzeugungsmittel (21) durchsuchten Ähnlichelementmodellgruppe beinhaltet, von der Möglichkeit des Ereignisses aufweist.

8. Fernverwaltungssystem nach Anspruch 1, **dadurch gekennzeichnet, dass** der zentrale Monitor (2) periodisch die Einrichtungsmodelle (MA1, ..., MA4; MB1, ..., MB4) verschiedener Einrichtungen (4A, ..., 7A; 4B, ..., 7B) von den ersten bis N-ten Einrichtungsverwaltungsvorrichtungen (1A; 1B) aufnimmt.

## Revendications

1. Système de gestion à distance comprenant des premier à N^{ième} (N ≥ 2) appareils (1A ; 1B) de gestion d'installation qui sont disposés dans des régions respectives (A, B) et gèrent des états des diverses installations (4A, 5A, 6A, 7A ; 4B, 5B, 6B, 7B) dans les régions, et un organe central de contrôle (2) qui est connecté aux appareils (1A ; 1B) de gestion d'installation par l'intermédiaire d'une ligne de communication et qui échange des informations avec les appareils (1A ; 1B) de gestion d'installation, **caractérisé en ce que**
les premier à N^{ième} appareils de gestion d'installation comprennent des dispositifs (1A1, 1B1) générateurs de modèle d'installation destinés à créer des modèles d'éléments (EM_{A1},..., EM_{A4} ; EM_{B1},..., EM_{B4}) pour divers éléments constituants d'une installation sur la base d'informations saisies telles que des données d'environnement, des données de mesure, des données propres à l'installation et des informations de caractère d'installation, un modèle d'élément d'un élément constituant d'une installation étant une règle prédéterminée pour la relation entre des informations d'entrée, telles que les données d'environnement, les données de mesure, les données propres à l'installation et les informations de caractère d'installation, et des sorties de l'installation, définissant un ensemble de modèles d'éléments comme modèle d'installation pour l'installation, et à créer des modèles d'installation (MA1,... MA4 ; MB1,...., MB4) pour diverses installations (4A,... 7A ; 4B,..., 7B), et
l'organe central de contrôle (2) comprend un dispositif analogue (21) de création de groupes de modèles d'éléments destiné à relever les modèles d'installation (MA1,..., MA4 ; MB1,..., MB4) des diverses installations (4A,..., 7A ; 4B,..., 7B) des premier à N^{ième} appareils (1A ; 1B) de gestion d'installation, à extraire des modèles analogues d'éléments (GK1,..., GK4 ; GS1,..., GS4 ; GN1,..., GN4 ; GB1,..., GB4) pour les modèles d'installation (MA1,..., MA4 ; MB1,..., MB4) et à définir un ensemble de modèles analogues d'éléments extraits comme groupe de modèles d'éléments semblables.

2. Système de gestion à distance selon la revendication 1, **caractérisé en ce que** les premier à N^{ième} appareils (1A ; 1B) de gestion d'installation comportent un dispositif (1A3 ; 1B3) de mémorisation des modèles d'installation créés (MA1,..., MA4 ; MB1,..., MB4) des diverses installations (4A,..., 7A ; 4B,..., 7B).

3. Système de gestion à distance selon la revendication 1 ou 2, **caractérisé en ce que** l'organe central de contrôle (2) comporte un dispositif (23) de mémorisation des modèles d'installation (MA1,..., MA4 ; MB1,..., MB4) des diverses installations (4A,..., 7A ; 4B,..., 7B) qui sont relevés à partir des premier à N^{ième} appareils (1A ; 1B) de gestion d'installation.

4. Système de gestion à distance selon la revendication 1, **caractérisé en ce que** l'organe central de contrôle (2) comporte un dispositif (24) destiné à mémoriser le groupe créé de modèles d'éléments semblables.

5. Système de gestion à distance selon la revendication 1, **caractérisé en ce que** le dispositif (21) générateur de groupes de modèles d'éléments semblables est destiné, lorsqu'un élément constituant est désigné à la suite de l'apparition d'un événement déterminé, à chercher un groupe de modèle d'éléments semblables comprenant un modèle d'élément de l'élément constituant désigné.

6. Système de gestion à distance selon la revendication 5, **caractérisé en ce que** l'organe central de contrôle (2) comporte un dispositif (22) d'affichage de modèles d'éléments semblables destiné à afficher les modèles d'éléments dans un groupe de modèles d'éléments semblables recherchés par le dispositif (21) de création de groupes de modèles d'éléments semblables.

7. Système de gestion à distance selon la revendication 5, **caractérisé en ce que** l'organe central de contrôle (2) comporte un dispositif de notification destiné à notifier une possibilité d'événements à un appareil de gestion d'installation qui a créé un modèle d'installation comprenant le modèle d'élément contenu dans le groupe de modèles d'éléments semblables recherché par le dispositif (21) de création de groupes de modèles d'éléments semblables.

8. Système de gestion à distance selon la revendication 1, **caractérisé en ce que** l'organe central de contrôle (2) relève périodiquement les modèles d'installation (MA1,..., MA4 ; MB1,..., MB4) des diverses installations (4A,..., 7A ; 4B,..., 7B) des premier à N^{ième} appareils (1A ; 1B) de gestion d'installation.
